# EUROPEAN PATENT APPLICATION

(11) **EP 1 249 783 A1**
(43) Date of publication of application: **16.10.2002**
(21) Application number: 02252510.9
(22) Date of filing: 08.04.2002
(51) Int. Cl.: G06F 17/60

(54) **Apparatus of providing site for selection and order of goods on network**

(30) Priority: 13.04.2001 JP 2001114855; 22.02.2002 JP 2002046671
(71) Applicant: SEIKO EPSON CORPORATION, Shinjuku-ku Tokyo (JP)
(72) Inventor: Kitahara, Kengo, Suwa-shi, Nagano-ken, 392-8502 (JP); Oshima, Yasuhiro, Suwa-shi, Nagano-ken, 392-8502 (JP); Komatsu, Koji, Suwa-shi, Nagano-ken, 392-8502 (JP); Suzuki, Junji, Suwa-shi, Nagano-ken, 392-8502 (JP)
(74) Representative: Sturt, Clifford Mark

(57) **Abstract**

An E-mail, which includes goods group information on selected goods as the contents of a cyber shopping cart and a URL for opening a shopping site, is sent to an input mail address of a specified recipient. In response to selection of the URL included in the E-mail, a restoration dialog box is open to restore the contents of the cyber shopping cart on the shopping site. The user copies the goods group information included in the E-mail and pastes the copied goods group information in an input field of the restoration dialog box. In response to a user's click of a 'Send' button, the pasted goods group information is reflected on the contents of the cyber shopping cart on the shopping site.

## Description

### BACKGROUND OF THE INVENTION

### 1. Filed of the Invention

The present invention relates to an apparatus of providing a site for selection and order of goods on a network, as well as to a method of selecting or ordering goods on the network.

### 2. Description of the Prior Art

Shopping sites have been proposed to allow each customer to select one or more desired goods among a number of available options and simultaneously order the selected goods. One proposed site allows the customer to select desired parts and members as constituents of a commodity and freely construct a desired level of the commodity for its purchase order. Another proposed site allows the customer to select one or a plurality of desired commodities in a cyber shopping cart for their purchase order.

When selection of goods is interrupted midway on any of these prior shopping sites, however, the customer should restart the selection of goods all over again. In the case of ordering a computer system that requires detailed settings of the specification or ordering a skiing kit or a golfing kit, while the customer who has sufficient knowledge in the field has no difficulties in selection of goods, the customer who has only poor knowledge in the field of those selected goods has difficulties in selection of goods and should ask an acquaintance who has sufficient knowledge to help the selection of goods. The site may provide such customers who have only poor knowledge in the field with a plurality of recommended options. But it is practically impossible to sufficiently meet the diverse needs of the respective customers.

### SUMMARY OF THE INVENTION

The object of the present invention is thus to allow each customer to resume selection of desired goods from a suspending state when the process of selecting goods is interrupted midway. The object of the present invention is also to allow even a customer who has only poor knowledge in a field relevant to goods of interest to select appropriate goods according to the customer's needs. The object of the present invention is further to allow each customer to easily specify goods that have been selected by another customer.

In order to achieve at least a part of the aforementioned objects, the present invention is structured as follows.

A first shopping site providing apparatus of the present invention is a shopping site providing apparatus that provides a shopping site on a network to allow a user to select and order at least one goods among a plurality of available goods, the shopping site providing apparatus including: an goods group setting module that, when the at least one goods is selected among the plurality of available goods, sets the selected goods as a specified goods group; an E-mail creating and sending module that creates an E-mail, which includes goods group information on the specified goods group and a preset selection mark mapped to site selection information for selecting the shopping site on the network, according to a predetermined format and sends the created E-mail to a specified mail address; and
a selection status restoration module that, when the preset selection mark included in the E-mail sent to the specified mail address is activated to open the shopping site on the network based on the site selection information mapped to the preset selection mark, restores a goods selection status on the displayed shopping site to a suspending selection state, in which the specified goods group is selected, based on the goods group information included in the E-mail.

In the first shopping site providing apparatus of the present invention, the E-mail created according to the predetermined format includes goods group information on the specified goods group set by the goods group setting module and a preset selection mark mapped to site selection information for selecting the shopping site on the network. The E-mail thus created is sent to a specified mail address . When the preset selection mark included in the E-mail sent to the specified mail address is activated to open the shopping site on the network based on the site selection information mapped to the preset selection mark, the goods selection status on the displayed shopping site is restored to a suspending selection state, in which the specified goods group is selected, based on the goods group information included in the E-mail. Even when selection of goods is interrupted midway, this arrangement enables the customer to resume the selection of goods from the suspending selection state. This arrangement also allows any expert or person who has sufficient knowledge in a field relevant to the available goods on the shopping site to select appropriate goods and send an E-mail specifying the selected goods to the customer. Even the customer who has only poor knowledge in the field can then select desired goods based on the information in the E-mail. This arrangement also enables the customer to receive an E-mail, which includes a preset selection mark and goods group information on a specified goods group selected by a third person, and readily select the specified goods group identical with the goods group selected by the third person by simply activating the preset selection mark.

As one aspect, in the first shopping site providing apparatus of the present invention, the E-mail creating and sending module can create the E-mail including the goods group information related to the preset selection mark.

A second shopping site providing apparatus of the present invention is a shopping site providing apparatus that provides a shopping site on a network to allow a user to select and order at least one goods among a plurality of available goods, the shopping site providing apparatus including: a goods group setting module that, when the at least one goods is selected among the plurality of available goods, sets the selected goods as a specified goods group; a mail software program activating module, when receiving a predetermined E-mail creation command from a client computer across the network, instructs the client computer to activate a mail software program installed in the client computer and create an E-mail, which includes goods group information on the specified goods group and a preset selection mark mapped to site selection information for selecting the shopping site on the network; and a selection status restoration module that, when the preset selection mark included in the E-mail, which is created according to the activated mail software program and sent to a specified mail address, is activated to open the shopping site on the network based on the site selection information mapped to the preset selection mark, restores a goods selection status on the displayed shopping site to a suspending selection state, in which the specified goods group is selected, based on the goods group information included in the E-mail.

In the second shopping site providing apparatus of the present invention, in response to a predetermined E-mail creation command output from the client computer across the network, an instruction is given to the client computer to activate a mail software program installed in the client computer and create an E-mail, which includes goods group information on the specified goods group set by the goods group setting module and a preset selection mark mapped to site selection information for selecting the shopping site on the network. While selection of goods is interrupted midway, this arrangement enables the customer to send an E-mail including the goods group information on the selected goods group to the customer's own mail address. This arrangement also allows any expert or person who has sufficient knowledge in a field relevant to the available goods on the shopping site to select appropriate goods and send an E-mail specifying the selected goods to the customer. When the preset selection mark included in the E-mail thus created and sent is activated to open the shopping site on the network based on the site selection information mapped to the preset selection mark, the goods selection status on the displayed shopping site is restored to a suspending selection state, in which the specified goods group is selected, based on the goods group information included in the E-mail. Even when selection of goods is interrupted midway, this arrangement enables the customer to resume the selection of goods from the suspending selection state. This arrangement also allows any expert or person who has sufficient knowledge in a field relevant to the available goods on the shopping site to select appropriate goods and send an E-mail specifying the selected goods to the customer. Even the customer who has only poor knowledge in the field can then select desired goods based on the information in the E-mail. This arrangement also enables the customer to receive an E-mail, which includes a preset selection mark and goods group information on a specified goods group selected by a third person, and readily select the specified goods group identical with the goods group selected by the third person by simply activating the preset selection mark.

As one aspect, in the second shopping site providing apparatus of the present invention, the mail software program activating module can activate the mail software program set as a standard mail software program in the client computer.

As another aspect, in the first and the second shopping site providing apparatus of the present invention, the goods group setting module can accept any of additional selection, deletion, and change of a goods in the goods selection status restored by the selection status restoration module, and sets the specified group. As still another aspect, there can be provided an order accepting module that, when a preset order mark is activated in the goods selection status restored by the selection status restoration module or in a modified goods selection status with reflection of any of addition selection, deletion, and change of a goods in the restored goods selection status, accepts an order of the specified goods group in the goods selection status. In this case the plurality of available goods may include parts and members consisting of one commodity which is constructed by a combination of at least two goods or the plurality of available goods may include different commodities.

A third shopping site providing apparatus of the present invention is a shopping site providing apparatus that provides a shopping site on a network to allow a user to select and order at least one goods among a plurality of available goods, the shopping site providing apparatus including: a status restoration module that, when a preset selection mark in an electronic document, which includes goods group information on a specified goods group selected and set in advance among the plurality of available goods and the preset selection mark mapped to site selection information for selecting the shopping site on the network, is activated to open the shopping site on the network based on the site selection information mapped to the preset selection mark, restores a goods selection status on the displayed shopping site to a suspending selection state, in which the specified goods group is selected, based on the goods group information included in the electronic document.

In the third shopping site providing apparatus of the present invention, when the preset selection mark mapped to site selection information and included in an electronic document is activated to open the shopping site on the network based on the site selection information mapped to the preset selection mark, the goods selection status on the displayed shopping site is restored to a suspending selection state, in which the specified goods group is selected, based on the goods group information included in the electronic document. This arrangement enables the customer to select goods by activating the preset selection mark included in the electronic document. The 'electronic document' here includes any of E-mails, diverse documents stored in storage media in a computer readable manner, and documents on the network like homepages on the Internet.

As one aspect, in the third shopping site providing apparatus of the present invention, the electronic document can include multiple different pieces of goods group information on a plurality of different goods groups, and the status restoration module selects any of the multiple different pieces of goods group information and sets the goods selection status on the shopping site based on the selected piece of goods group information. As another aspect, the status restoration module can restore the goods selection status based on the goods group information related to the preset selection mark and included in the electronic document. As still another aspect, there can be provided an order accepting module that, when a preset order mark is activated in the goods selection status restored by the selection status restoration module or in a modified goods selection status with reflection of any of addition selection, deletion, and change of a goods in the restored goods selection status, accepts an order of the specified goods group in the goods selection status. In this case, the plurality of available goods may include parts and members consisting of one commodity which is constructed by a combination of at least two goods or the plurality of available goods may include different commodities.

The technique of the present invention is not restricted to the apparatus of providing the site for selection and order of goods, but is also attained by a method of selecting goods on such a site or by a method of ordering goods on such a site. Another application of the present invention is a recording medium, in which a computer program is recorded to cause the computer to function as the shopping site providing apparatus discussed above.

### BRIEF DESCRIPTION OF THE DRAWINGS

Fig. 1 schematically illustrates the configuration of a network including a computer functioning as a shopping site providing apparatus in one embodiment of the present invention;
Fig. 2 is a flowchart showing a goods selection-related E-mail sending routine executed by the computer functioning as the shopping site providing apparatus;
Fig. 3 illustrates a list check dialog box enumerating the contents of a shopping cart;
Fig. 4 illustrates an E-mail send dialog box;
Fig. 5 shows one example of E-mail sent from a shopping site of the embodiment;
Fig. 6 is a flowchart showing a goods selection status restoration routine executed by the computer functioning as the shopping site providing apparatus;
Fig. 7 illustrates a restoration dialog box for goods group information;
Fig. 8 shows another example of E-mail sent from the shopping site of the embodiment;
Fig. 9 shows a direct mail including information on a plurality of available goods groups;
Fig. 10 is a flowchart showing another goods selection-related E-mail sending routine in one modified example; and
Fig. 11 illustrates an E-mail message dialog box that is open on a customer's computer when a mail software program is activated to create an E-mail including a URL and goods group information.

### DESCRIPTION OF THE PREFERRED EMBODIMENTS

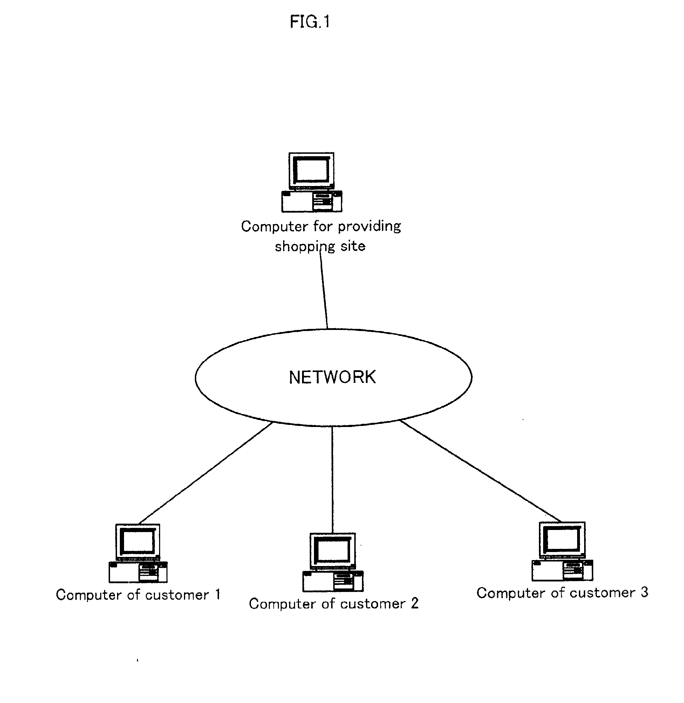

One mode of carrying out the present invention is discussed below as a preferred embodiment. Fig. 1 schematically illustrates the configuration of a network including a computer functioning as a shopping site providing apparatus in one embodiment of the present invention. The network including the computer that functions as the shopping site providing apparatus of the embodiment is established as a computer network (for example, the Internet) where multiple computers including a computer for providing a shopping site and computers of customers 1 through 3 are connected via a communication line. In the configuration of this embodiment, each customer connects the customer's computer to the network, for example, via a telephone line and inputs an address (for example, the URL in the Internet) for gaining access to the shopping site on a manipulative software program for the network (for example, the browser in the Internet). This enables the customer to access the shopping site and to select desired goods and order the selected goods on the shopping site. For simplicity of explanation, the Internet is used as the computer network in this embodiment. The present invention is mainly characterized by the technique that allows the customer accessing the shopping site to send an E-mail including information on the selected goods to any specified recipient and restores the suspending state of goods selection on the shopping site with the information on the selected goods included in the E-mail sent to the specified recipient. The following describes these characteristics in detail.

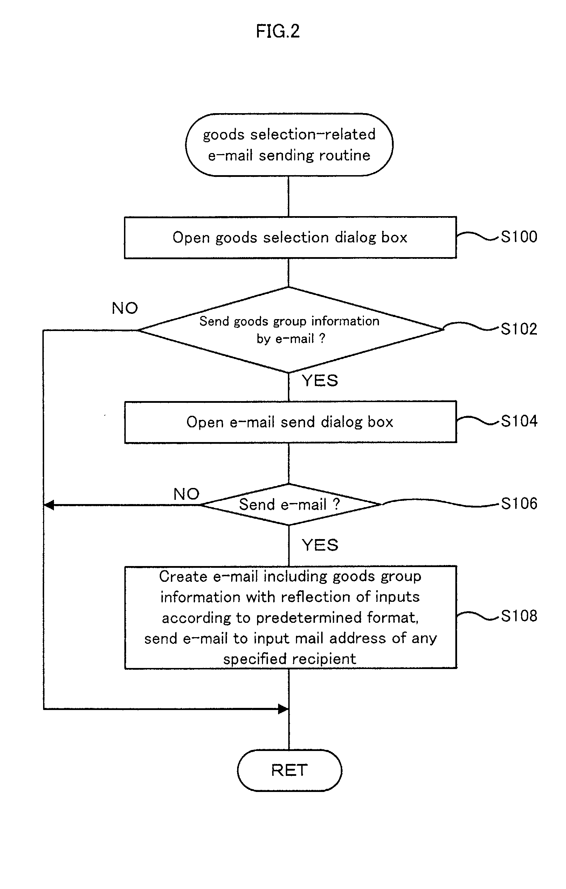

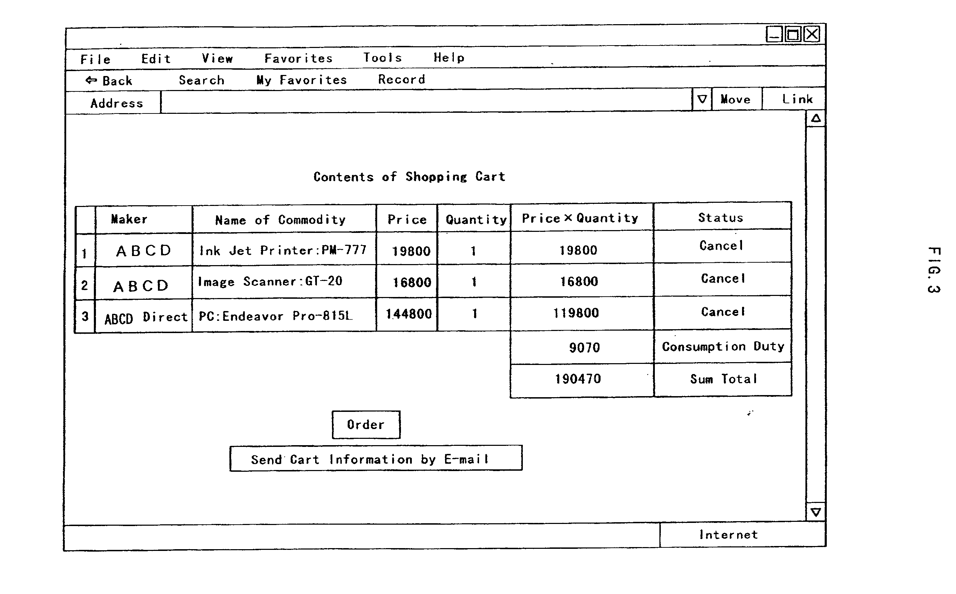

Fig. 2 is a flowchart showing a goods selection-related E-mail sending routine executed by the computer functioning as the shopping site providing apparatus. This routine is executed when the customer specifies selection of goods (purchase or estimate) on the shopping site. When the program enters the goods selection-related E-mail sending routine, a goods selection dialog box is first open on the shopping site at step S100. The customer selects one or a plurality of desired goods by clicking the desired goods in a list of available goods (not shown) with a mouse and inputting desired quantities of the respective goods. The customer may alternatively drag and drop the desired goods onto a cyber shopping cart by the specific number of times corresponding to the desired quantities of the respective goods. In this embodiment, the goods selection is implemented by dragging and dropping the desired goods onto the cyber shopping cart by the specific number of times corresponding to the desired quantities of the respective goods. Fig. 3 illustrates a list check dialog box enumerating the contents of the shopping cart, that is, information on the selected goods. In the example of Fig. 3, the contents of the shopping cart enumerated in the list check dialog box include the manufacturer or seller of each selected goods (commodity) as the maker, the name of the commodity, the price, the quantity, the sub-total obtained by multiplying the quantity by the price, the select-cancel status. The consumption taxes on the selected goods (commodities) and the sum total including the consumption taxes are also shown in the list check dialog box. In this embodiment, the list check dialog box enumerating the contents of the shopping cart also has two buttons 'Order' and 'Send Cart Information by E-mail'. The selected goods (commodities) displayed as the contents of the shopping cart are ordered for purchase, in response to a click of the 'Order' button. The list check dialog box enumerating the contents of the shopping cart is open on a different window from the goods selection dialog box. When the customer selects desired goods on the goods selection dialog box, the selected goods are displayed as goods group information in the list check dialog box enumerating the contents of the shopping cart.

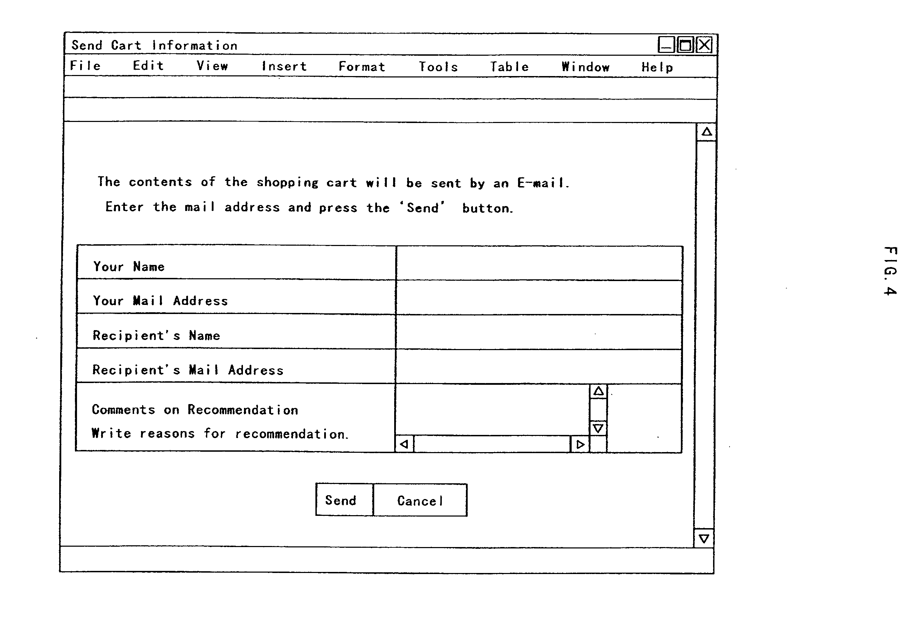

In response to a click of the button 'Send Cart Information by E-mail' on the list check dialog box enumerating the contents of the cyber shopping cart at step S102 in the flowchart of Fig. 2, an E-mail send dialog box is open to wait for required inputs at step S104. Fig. 4 illustrates an E-mail send dialog box. In the example of Fig. 4, the E-mail send dialog box has fields 'Your Name' 'Your Mail Address', 'Recipient's Name', 'Recipient's Mail Address', and 'Comments on Recommendation', in which the customer enters the required pieces of information. The customer may send an E-mail to the customer's own mail address or any specified recipient. The E-mail send dialog box has buttons ' 'Send' and 'Cancel'. In response to a click of the 'Cancel' button, the current specification on the E-mail send dialog box is cleared, and the display returns to the list check dialog box enumerating the contents of the shopping cart shown in Fig. 3.

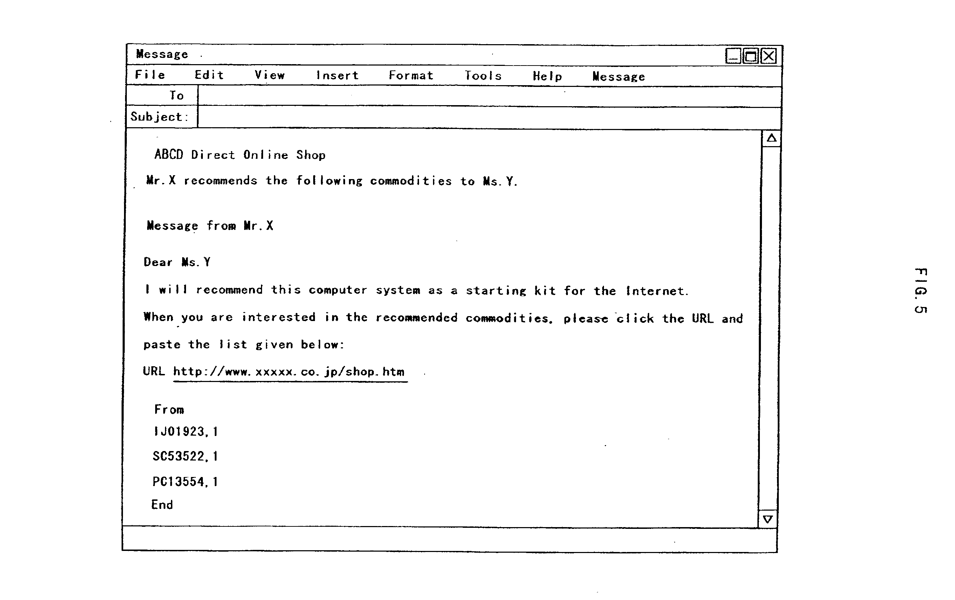

When the customer enters the required pieces of information in the respective fields and clicks the 'Send' button at step S106 in the flowchart of Fig. 2, on the other hand, an E-mail including the goods group information is created with reflection of the inputs according to a predetermined format and is sent to the customer's mail address or the input mail address of any specified recipient at step S108. The program then exits from this routine. Fig. 5 illustrates an E-mail created and sent by the above series of processing. In the example of Fig. 5, the E-mail is sent from the customer 'Mr. X' to a specified recipient 'Ms. Y'. The E-mail includes a URL (http://www.xxxxx.co.jp/shop.htm) for gaining access to the shopping site and opening the list check dialog box enumerating the contents of the shopping cart, as well as goods group information 'IJ01923,1', 'SC53522,1', and 'PC13554,1'. The goods group information regards the 'name of the commodity' and the 'quantity' in the list check dialog box shown in Fig. 3. In this example, the goods group information 'IJ01923,1', 'SC53522,1', and 'PC13554,1' respectively denote 'one Ink Jet Printer: PM-777', 'one Image Scanner: GT-20', and 'one PC: Endeavor Pro-815L'.

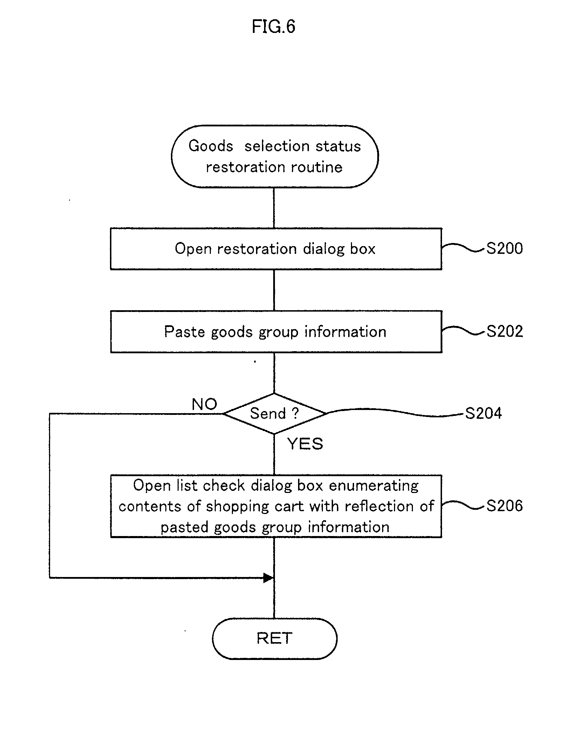

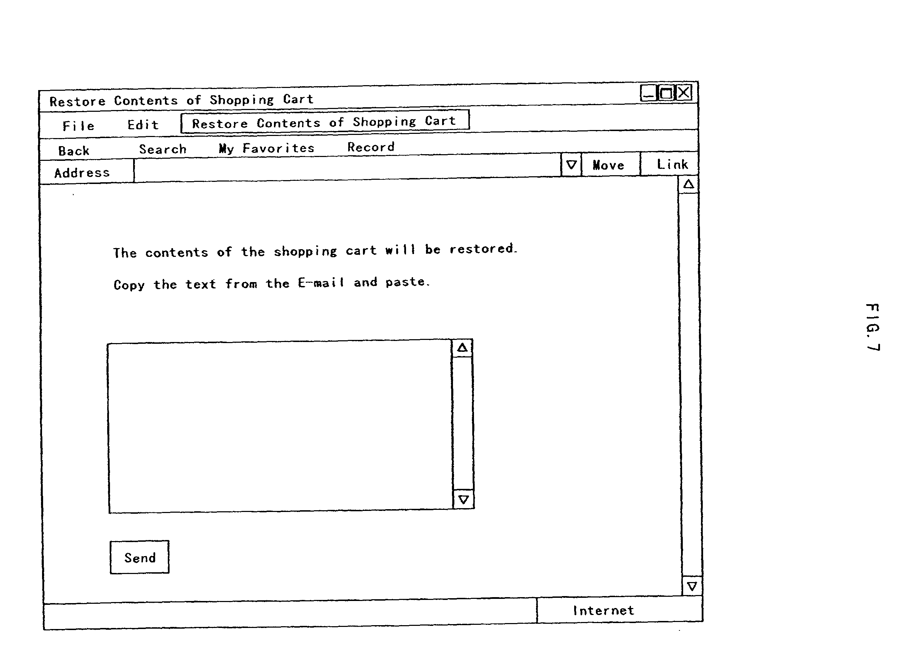

The following describes a process of selecting the URL included in the E-mail to gain access to the shopping site, open the list check dialog box enumerating the contents of the shopping cart, and restore the contents of the shopping cart. Fig. 6 is a flowchart showing a goods selection status restoration routine executed by the computer functioning as the shopping site providing apparatus. This processing routine is executed when the URL included in the E-mail is selected to open the shopping site. When the program enters the goods selection status restoration routine, a restoration dialog box for goods group information is open on the shopping site at step S200 to wait for paste of the goods group information at step S202. Fig. 7 illustrates an example of the restoration dialog box for goods group information. In the example of Fig. 7, the goods group information written in the specified range as "From", "End" of the E-mail shown in Fig. 5 is copied and pasted in an input field on the restoration dialog box. Restoration is effected in response to a click of a 'Send' button on the restoration dialog box.

When the goods group information is pasted at step S202 and the 'Send' button is clicked at step S204, the list check dialog box enumerating the contents of the shopping cart (see Fig. 3) with reflection of the pasted goods group information and the goods selection dialog box are open at step S206. The program then exists from this routine. The goods selection dialog box displayed here is identical with the goods selection dialog box open at step S100 in the goods selection-related E-mail sending routine shown in the flowchart of Fig. 2. The list check dialog box enumerating the contents of the shopping cart is open on a different window from the goods selection dialog box. The customer may add newly selected goods to or delete part of the selected goods from the restored goods group information to modify the contents of the hoping cart. The customer may also send another E-mail including the goods group information, which corresponds to the modified specification in the list check dialog box enumerating the contents of the shopping cart, to the mail address of a specified recipient.

The shopping site providing apparatus of the embodiment described above enables the customer to create an E-mail including information on the selected goods (goods group information) and the URL for opening the shopping site and send the E-mail to a desired recipient. By selecting the URL in the E-mail and pasting the goods group information included in the E-mail, the shopping site is open and the goods (commodity) selection status in the list check dialog box enumerating the contents of the shopping cart on the site is restored based on the goods group information. Even when selection of goods (commodities) is interrupted midway, this arrangement enables the customer to resume the selection of goods from the suspending selection state. This arrangement also allows the customer who has only poor knowledge in the field to ask an acquaintance who has sufficient knowledge in the field relevant to the goods to select appropriate goods and send an E-mail describing the selection. The customer can then select desired goods (commodities) according to the acquaintance's advice.

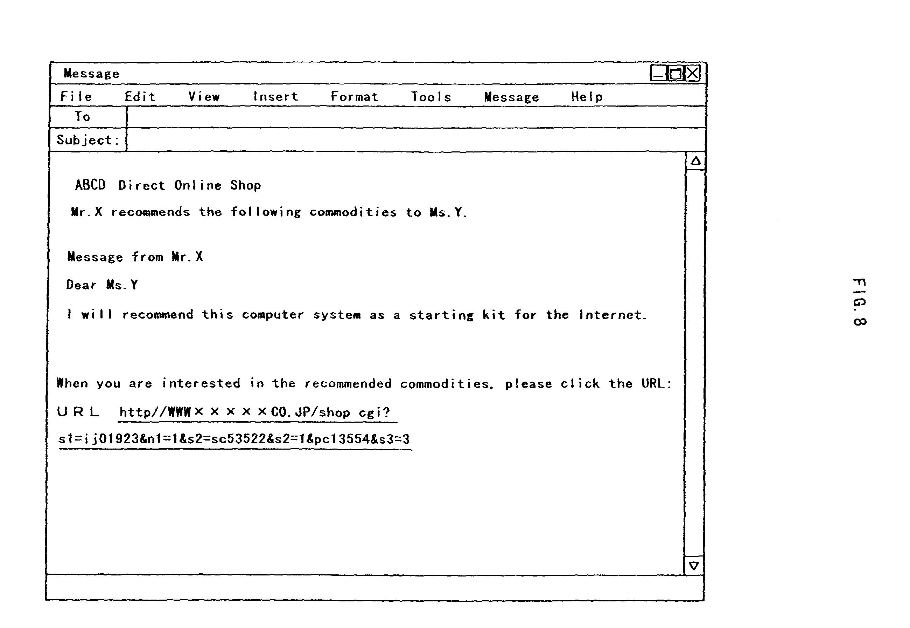

In the shopping site providing apparatus of the embodiment, an E-mail including information on the selected goods (goods group information) and the URL for opening the shopping site is created. The goods (commodity) selection status in the list check dialog box enumerating the contents of the shopping cart is restored with the goods group information included in the E-mail by pasting the goods group information in the input field of the restoration dialog box open on the shopping site in response to selection of the URL included in the E-mail. In one modified arrangement, the goods group information is assigned to the URL for opening the shopping site, which is written in an E-mail. In response to selection of the URL, the goods group information is automatically reflected on the goods (commodity) selection status in the list check dialog box enumerating the contents of the shopping cart. An E-mail created by the procedure of this arrangement is shown in Fig. 8. In the E-mail of Fig. 8, goods group information (s1=ij01923&n1=1&s2=sc53522&s2=1&pc13554&s3=3) is written after a question mark, which comes immediately after the site address in the URL. In this example, the goods group information regards the 'name of the commodity' and the 'quantity' in the list check dialog box shown in Fig. 3. Here ' s1=ij01923', ' s2=sc53522', and 'pc13554' respectively denote 'Ink Jet Printer: PM-777', 'Image Scanner: GT-20', and 'PC: Endeavor Pro-815L', and 'n1=1', 's2=1', and 's3=3' denote the quantities of the respective goods. In this arrangement, by simply selecting the URL included in the E-mail, the shopping site is open, and the goods (commodity) selection status is restored to the suspending selection state in the list check dialog box enumerating the contents of the shopping cart, based on the goods group information assigned to the URL.

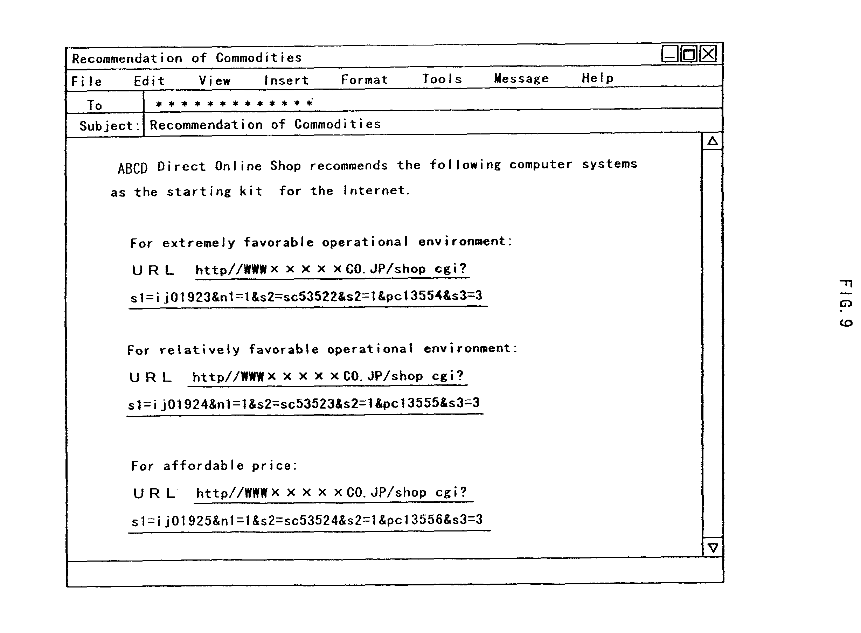

In the shopping site providing apparatus of the embodiment, the goods (commodity) selection status is restored to the suspending selection state with the goods group information by selecting the URL included in the E-mail, which has been created in advance on the shopping site, and pasting the goods group information, which is also included in the E-mail, in the input field of the restoration dialog box. In one modified arrangement, the goods group information and the URL for opening the shopping site are included in an E-mail or an electronic document created in any site other than the shopping site. By selecting the URL included in the E-mail or the electronic document, the shopping site is open, and the goods group information is reflected on the list check dialog box enumerating the contents of the shopping cart. For example, a direct mail including the goods group information and the URL for opening the shopping site is sent from the site to specified customers or any unspecified number of customers. In response to selection of the URL in the direct mail, the goods group information is reflected on the list check dialog box enumerating the contents of the shopping cart. In this case, multiple pieces of goods group information and their corresponding URLs may be included in one direct mail. A direct mail including multiple pieces of goods group information is shown in Fig. 9 as an example. In the direct mail of Fig. 9, each piece of goods group information is assigned to each URL for opening a specific page of the shopping site. Like the E-mail shown in Fig. 5, however, the direct mail may alternatively include a plurality of the specified ranges as "From", "End".

In this example, the direct mail includes the URLs to which the multiple pieces of goods group information are assigned. In one possible modification, the URLs to which the multiple pieces of goods group information are assigned may be included in an electronic document attached to the direct mail. In another possible modification, the URLs to which the multiple pieces of goods group information or the combination of the goods group information with the URLs may be included in an electronic document, which is stored in a storage medium, for example, a CD-ROM attached to a magazine as an appendix. In still another possible modification, the URLs to which the multiple pieces of goods group information or the combination of the goods group information with the URLs may be included in an electronic document on the network. In one example of the last case, the outline of the goods group information and the URL for opening a specific page of the shopping site including the goods group information are described in a homepage on the Internet or in a page on a certain site different from the shopping site. In response to selection of the URL in the page, the shopping site is open, and the goods group information mapped to the URL is reflected on the list check dialog box enumerating the contents of the shopping cart. The technique of restoring the goods selection status with the goods group information is not restricted to selection of the URL to which the goods group information is assigned. In another arrangement, a button for restoring the goods selection status with the goods group information is provided on the shopping site, which is open in response to selection of the URL in the page. The goods group information is returned to the shopping cart in response to a click of the button.

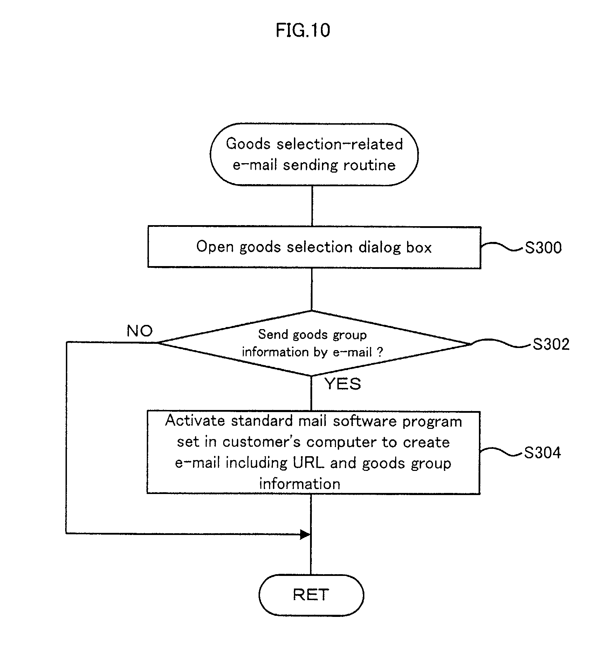

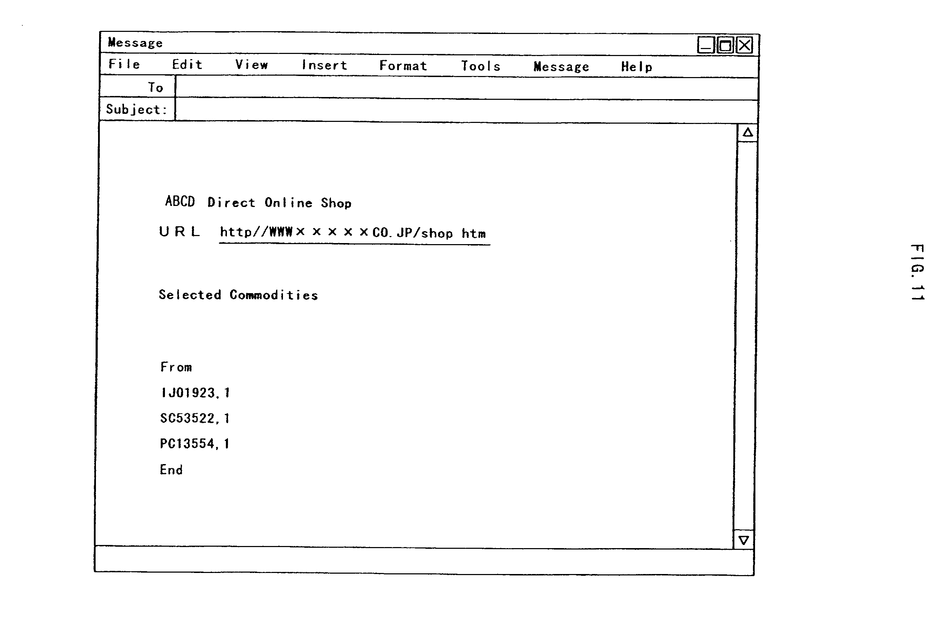

In the shopping site providing apparatus of the embodiment, in response to a click of the button 'Send Cart Information by E-mail' on the list check dialog box enumerating the contents of the shopping cart, an E-mail including the goods group information and the URL for opening the shopping site is created and sent to the specified recipient. In one modified arrangement, a mail software program installed and set as the standard mail software program in a customer's computer is activated to create an E-mail including the goods group information and the URL for opening the shopping site. In this case, a goods selection-related E-mail sending routine shown in the flowchart of Fig. 10 is executed, in place of the goods selection-related E-mail sending routine shown in the flowchart of Fig. 2. The customer inputs the mail address of a specified recipient, creates a message in an E-mail, and sends the E-mail according to the mail software program. Fig. 11 illustrates an E-mail message dialog box that is open on the customer's computer when the mail software program is activated to create an E-mail including the URL and the goods group information. This arrangement enables the customer to use the favorite standard mail software program set in the customer' s computer for adding a desired message to the E-mail including the URL and the goods group information. In this modified example, the standard mail software program set in the customer's computer is activated to create the E-mail. Any mail software program set in the customer's computer may be used in place of the standard mail software program. Otherwise a specified mail software program may be transferred from the computer functioning as the shopping site providing apparatus.

In the shopping site providing apparatus of the embodiment, an E-mail including the goods group information and the URL for opening the shopping site is created and sent to the specified recipient. The goods (commodity) selection status is restored on the list check dialog box enumerating the contents of the shopping cart by simply selecting the URL included in the E-mail and pasting the goods group information included in the E-mail. In one possible modification, no E-mail including the goods group information and the URL for opening the shopping site may be created, while the goods (commodity) selection status is restored on the list check dialog box enumerating the contents of the shopping cart based on the URL and the goods group information included in any of E-mails and electronic documents.

In the above embodiment, the customer selects a personal computer, a printer, and a scanner as the constituents of a starting kit of the Internet on the shopping site. The plurality of available options provided on the shopping site are, however, not restricted to such a starting kit of the Internet, but may be any commodities including various sports equipment like ski equipment and tennis equipment, office furniture like desks and chairs, and other equipment. A plurality of commodities are selected as the desired goods and specified as the goods group information on the shopping site of the embodiment. In another example, a plurality of parts and members for constructing one commodity may be selected as the desired goods and specified as the goods group information.

The above embodiment describes the shopping site providing apparatus as one mode of carrying out the present invention. The technique of the present invention is, however, not restricted to the shopping site providing apparatus, but is also attained by a method of selecting goods on the shopping site and a program for providing the shopping site. In the case of a program that causes the computer to function as any of the shopping site providing apparatuses of the embodiment and its modified examples discussed above, the respective steps of the processing routines executed by the shopping site providing apparatus are described in an appropriate programming language.

The above embodiment is to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein.

## Claims

1. A shopping site providing apparatus that provides a shopping site on a network to allow a user to select and order at least one goods among a plurality of available goods, said shopping site providing apparatus comprising:
a goods group setting module that, when the at least one goods is selected among the plurality of available goods, sets the selected goods as a specified goods group;
an E-mail creating and sending module that creates an E-mail, which includes goods group information on the specified goods group and a preset selection mark mapped to site selection information for selecting the shopping site on the network, referring to a predetermined format and sends the created E-mail to a specified mail address; and
a selection status restoration module that, when the preset selection mark included in the E-mail sent to the specified mail address is activated to open the shopping site on the network based on the site selection information mapped to the preset selection mark, restores a goods selection status on the displayed shopping site to a suspending selection state, in which the specified goods group is selected, based on the goods group information included in the E-mail.

2. A shopping site providing apparatus in accordance with claim 1, wherein said E-mail creating and sending module creates the E-mail including the goods group information related to the preset selection mark.

3. A shopping site providing apparatus in accordance with claim 1, wherein said goods group setting module accepts any of additional selection, deletion, and change of a goods in the goods selection status restored by said selection status restoration module, and sets the specified goods group.

4. A shopping site providing apparatus in accordance with claim 1, said shopping site providing apparatus further comprising:
an order accepting module that, when a preset order mark is activated in the goods selection status restored by said selection status restoration module or in a modified goods selection status with reflection of any of addition selection, deletion, and change of a goods in the restored goods selection status, accepts an order of the specified goods group in the goods selection status.

5. A shopping site providing apparatus in accordance with claim 1, wherein the plurality of available goods include parts and members consisting of one commodity, which is constructed by a combination of at least two goods.

6. A shopping site providing apparatus in accordance with claim 1, wherein the plurality of available goods include different commodities.

7. A shopping site providing apparatus that provides a shopping site on a network to allow a user to select and order at least one goods among a plurality of available goods, said shopping site providing apparatus comprising:
a goods group setting module that, when the at least one goods is selected among the plurality of available goods, sets the selected goods as a specified goods group;
a mail software program activating module, when receiving a predetermined E-mail creation command from a client computer across the network, instructs said client computer to activate a mail software program installed in said client computer and create an E-mail, which includes goods group information on the specified goods group and a preset selection mark mapped to site selection information for selecting the shopping site on the network; and
a selection status restoration module that, when the preset selection mark included in the E-mail, which is created according to the activated mail software program and sent to a specified mail address, is activated to open the shopping site on the network based on the site selection information mapped to the preset selection mark, restores a goods selection status on the displayed shopping site to a suspending selection state, in which the specified goods group is selected, based on the goods group information included in the E-mail.

8. A shopping site providing apparatus in accordance with claim 7, wherein said mail software program activating module activates the mail software program set as a standard mail software program in said client computer.

9. A shopping site providing apparatus in accordance with claim7, wherein said goods group setting module accepts any of additional selection, deletion, and change of goods in the goods selection status restored by said selection status restoration module, and sets the specified goods group.

10. A shopping site providing apparatus in accordance with claim7, said shopping site providing apparatus further comprising:
an order accepting module that, when a preset order mark is activated in the goods selection status restored by said selection status restoration module or in a modified goods selection status with reflection of any of addition selection, deletion, and change of goods in the restored goods selection status, accepts an order of the specified goods group in the goods selection status.

11. A shopping site providing apparatus in accordance with claim7, wherein the plurality of available goods include parts and members consisting of one commodity, which is constructed by a combination of at least two goods.

12. A shopping site providing apparatus in accordance with claim7, wherein the plurality of available goods include different commodities.

13. A shopping site providing apparatus that provides a shopping site on a network to allow a user to select and order at least one goods among a plurality of available goods, said shopping site providing apparatus comprising:
a status restoration module that, when a preset selection mark in an electronic document, which includes goods group information on a specified goods group selected and set in advance among the plurality of available goods and the preset selection mark mapped to site selection information for selecting the shopping site on the network, is activated to open the shopping site on the network based on the site selection information mapped to the preset selection mark, restores a goods selection status on the displayed shopping site to a suspending selection state, in which the specified goods group is selected, based on the goods group information included in the electronic document.

14. A shopping site providing apparatus in accordance with claim 13, wherein the electronic document is an E-mail.

15. A shopping site providing apparatus in accordance with claim 13, wherein the electronic document includes multiple different pieces of goods group information on a plurality of different goods groups, and
said status restoration module selects any of the multiple different pieces of goods group information and sets the goods selection status on the shopping site based on the selected piece of goods group information.

16. A shopping site providing apparatus in accordance with claim 13, wherein said status restoration module restores the goods selection status based on the goods group information related to the preset selection mark and included in the electronic document.

17. A shopping site providing apparatus in accordance with claim 13, said shopping site providing apparatus further comprising:
an order accepting module that, when a preset order mark is activated in the goods selection status restored by said selection status restoration module or in a modified goods selection status with reflection of any of addition selection, deletion, and change of goods in the restored goods selection status, accepts an order of the specified goods group in the goods selection status.

18. A shopping site providing apparatus in accordance with claim 13, wherein the plurality of available goods include parts and members consisting of one commodity, which is constructed by a combination of at least two goods.

19. A shopping site providing apparatus in accordance with claim 13, wherein the plurality of available goods include different commodities.

20. A method of goods selection in a shopping site on a network that allows a user to select and order at least one goods among a plurality of available goods, said method of goods selection comprising the steps of:
(a) selecting at least one goods among the plurality of available goods on the shopping site and setting the selected goods as a specified goods group;
(b) creating an E-mail, which includes goods group information on the specified goods group and a preset selection mark mapped to site selection information for selecting the shopping site on the network, according to a predetermined format and sending the created E-mail to a specified mail address; and
(c) restoring a goods selection status on the displayed shopping site to a suspending selection state, in which the specified goods group is selected, based on the goods group information included in the E-mail when the preset selection mark included in the E-mail sent to the specified mail address is activated to open the shopping site on the network based on the site selection information mapped to the preset selection mark.

21. A method of goods selection in accordance with claim 20, wherein said step (b) comprises the step of creating the E-mail including the goods group information related to the preset selection mark.

22. A method of goods selection in accordance with claim 20, wherein said step (a) comprises the step of setting the specified goods group with reflection of any of additional selection, deletion, and change of goods in the goods selection status on the shopping site restored in said step (c).

23. A method of goods selection in accordance with claim 20, wherein the plurality of available goods include parts and members consisting of one commodity, which is constructed by a combination of at least two goods.

24. A method of goods selection in accordance with claim 20, wherein the plurality of available goods include different commodities.

25. A method of goods selection in accordance with claim 20, said method of goods selection further comprising the step of:
activating a preset order mark in the goods selection status on the shopping site restored in response to activation of the preset selection mark or in a modified goods selection status with reflection of any of addition selection, deletion, and change of goods in the restored goods selection status, so as to order the specified goods group in the goods selection status on the shopping site.

26. A method of goods selection in a shopping site on a network that allows a user to select and order at least one goods among a plurality of available goods, said method of goods selection comprising the steps of:
(a) selecting at least one goods among the plurality of available goods on the shopping site and setting the selected goods as a specified goods group;
(b) instructing a client computer to activate a mail software program installed in said client computer and create an E-mail, which includes goods group information on the specified goods group and a preset selection mark mapped to site selection information for selecting the shopping site on the network, in response to a predetermined E-mail creation command output from said client computer across the network; and
(c)restoring a goods selection status on the displayed shopping site to a suspending selection state, in which the specified goods group is selected, based on the goods group information included in the E-mail when the preset selection mark included in the E-mail, which is created according to the activated mail software program and sent to a specified mail address, is activated to open the shopping site on the network based on the site selection information mapped to the preset selection mark.

27. A method of goods selection in accordance with claim 26, wherein said step (b) comprises the step of activating the mail software program set as a standard mail software program in said client computer.

28. A method of goods selection in accordance with claim 26, wherein said step (a) comprises the step of setting the specified goods group with reflection of any of additional selection, deletion, and change of goods in the goods selection status on the shopping site restored in said step (c).

29. A method of goods selection in accordance with claim 26, wherein the plurality of available goods include parts and members consisting of one commodity, which is constructed by a combination of at least two goods.

30. A method of goods selection in accordance with claim 26, wherein the plurality of available goods include different commodities.

31. A method of goods selection in accordance with claim 26, said method of goods selection further comprising the step of:
activating a preset order mark in the goods selection status on the shopping site restored in response to activation of the preset selection mark or in a modified goods selection status with reflection of any of addition selection, deletion, and change of goods in the restored goods selection status, so as to order the specified goods group in the goods selection status on the shopping site.

32. A method of goods selection in a shopping site on a network that allows a user to select and order at least one goods among a plurality of available goods, said method of goods selection comprising the step of:
restoring a goods selection status on the displayed shopping site to a suspending selection state, in which a specified goods group is selected, based on the goods group information included in an electronic document when a preset selection mark in the electronic document, which includes goods group information on the specified goods group selected and set in advance among the plurality of available goods and the preset selection mark mapped to site selection information for selecting the shopping site on the network, is activated to open the shopping site on the network based on the site selection information mapped to the preset selection mark.

33. A method of goods selection in accordance with claim 32, wherein the electronic document is an E-mail.

34. A method of goods selection in accordance with claim 32, wherein the electronic mail includes a plurality of preset selection marks respectively assigned to multiple different pieces of goods group information on a plurality of different goods groups, and
said restoring step comprises the step of:
setting the goods selection status on the shopping site based on a specific piece of goods group information related to the selected preset selection mark, in response to selection of any of the plurality of preset selection marks.

35. A method of goods selection in accordance with claim 32, wherein said restoring step comprises the step of:
restoring the goods selection status based on the goods group information related to the preset selection mark and included in the electronic document.

36. A method of goods selection in accordance with claim 32, wherein the plurality of available goods include parts and members consisting of one commodity, which is constructed by a combination of at least two goods.

37. A method of goods selection in accordance with claim 32, wherein the plurality of available goods include different commodities.

38. A method of goods selection in accordance with claim 32, said method of goods selection further comprising the step of:
activating a preset order mark in the goods selection status on the shopping site restored in response to activation of the preset selection mark or in a modified goods selection status with reflection of any of addition selection, deletion, and change of goods in the restored goods selection status, so as to order the specified goods group in the goods selection status on the shopping site.

39. A storage medium in which a computer program is stored to cause a computer to function as a shopping site providing apparatus that provides a shopping site on a network to allow a user to select and order at least one goods among a plurality of available goods, said shopping site providing apparatus comprising: a goods group setting module that, when the at least one goods is selected among the plurality of available goods, sets the selected goods as a specified goods group; an E-mail creating and sending module that creates an E-mail, which includes goods group information on the specified goods group and a preset selection mark mapped to site selection information for selecting the shopping site on the network, according to a predetermined format and sends the created E-mail to a specified mail address; and a selection status restoration module that, when the preset selection mark included in the E-mail sent to the specified mail address is activated to open the shopping site on the network based on the site selection information mapped to the preset selection mark, restores a goods selection status on the displayed shopping site to a suspending selection state, in which the specified goods group is selected, based on the goods group information included in the E-mail.

40. A storage medium in which a computer program is stored to cause a computer to function as a shopping site providing apparatus that provides a shopping site on a network to allow a user to select and order at least one goods among a plurality of available goods, said shopping site providing apparatus comprising: a goods group setting module that, when the at least one goods is selected among the plurality of available goods, sets the selected goods as a specified goods group; a mail software program activating module, when receiving a predetermined E-mail creation command from a client computer across the network, instructs said client computer to activate a mail software program installed in said client computer and create an E-mail, which includes goods group information on the specified goods group and a preset selection mark mapped to site selection information for selecting the shopping site on the network; and a selection status restoration module that, when the preset selection mark included in the E-mail, which is created according to the activated mail software program and sent to a specified mail address, is activated to open the shopping site on the network based on the site selection information mapped to the preset selection mark, restores a goods selection status on the displayed shopping site to a suspending selection state, in which the specified goods group is selected, based on the goods group information included in the E-mail.

41. A storage medium in which a computer program is stored to cause a computer to function as a shopping site providing apparatus that provides a shopping site on a network to allow a user to select and order at least one goods among a plurality of available goods, said shopping site providing apparatus comprising: a status restoration module that, when a preset selection mark in an electronic document, which includes goods group information on a specified goods group selected and set in advance among the plurality of available goods and the preset selection mark mapped to site selection information for selecting the shopping site on the network, is activated to open the shopping site on the network based on the site selection information mapped to the preset selection mark, restores a goods selection status on the displayed shopping site to a suspending selection state, in which the specified goods group is selected, based on the goods group information included in the electronic document.
